# EUROPEAN PATENT APPLICATION

(11) **EP 1 662 351 A2**
(43) Date of publication of application: **31.05.2006**
(21) Application number: 05257188.2
(22) Date of filing: 22.11.2005
(51) Int. Cl.: G05B 19/4062

(54) **Controller**

(30) Priority: 26.11.2004 JP 2004341705
(71) Applicant: FANUC LTD, Minamitsuru-gun, Yamanashi 401-0597 (JP)
(72) Inventor: Iwashita, Yasusuke, Fujiyoshida-shi Yamanashi 403-0003 (JP); Okita, Tadashi, Fujiyoshida-shi Yamanashi 403-005 (JP); Kawamura, Hiroyuki, Minamitsuru-gun Yamanashi 401-0301 (JP); Ikai, Satoshi, Fanuc, Minamitsuru-gun Yamanashi 401-0511 (JP)
(74) Representative: Billington, Lawrence Emlyn

(57) **Abstract**

Disclosed is a controller for detecting need of maintenance, abnormal operation, etc. of a machine attributable to reduction of its strength caused by secular change. Acceleration detecting means are attached to driven elements that are driven by servomotors. Respective processors of axis control circuits for feedback-controlling the positions and velocities of the servomotors perform position and velocity feedback control processing for each position/velocity control period, thereby obtaining current commands, and output the commands to current loop processing. Detected acceleration values af are read from the acceleration detecting means. When the detected acceleration values a f are not smaller than a threshold value as, an abnormality signal is outputted, whereupon an alarm is displayed and the machine operation is stopped. Since the accelerations of the driven elements are detected directly by the acceleration detecting means, abnormality of the machine, such as frequent vibration attributable to aging of the machine, collision of the driven elements with other objects, or breakage of parts, can be detected securely.

## Description

### BACKGROUND OF THE INVENTION

### 1. Field of the Invention

The present invention relates to a controller for controlling a position and/or a velocity of a driven member in a machining apparatus such as a machine tool.

### 2. Description of the Related Art

In a machining apparatus, such as a machine tool, a tool is moved relatively to a workpiece to be machined as machining is performed. In order to control the position and velocity of machining, driven elements (workpiece, table on which the workpiece, tool, etc.) are driven by servomotors, and their positions and velocities are normally controlled by position, velocity, and current feedbacks.

With the driven elements driven by the motors for position and velocity control, the machine gradually becomes more easily swingable with time as it continues to be used. Depending on its individual difference, the machine is reduced in strength, so that the operational accuracy for position and velocity lowers. In the case of a machine tool, its machining accuracy lowers. It is difficult, however, to detect these prolonged changes.

Conventionally, malfunction or abnormality of a machine is detected in accordance with signals from attached position and velocity detectors, current commands for motors, actual current values detected by current detectors, etc. In the case of a machine tool, for example, the occurrence of abnormality, such as tool wear or breakage, collision or interference of the driven elements with other objects, etc., is detected by discriminating the current level of the motors that drive the tool and workpiece.

If the velocities and accelerations of the driven elements change suddenly, moreover, the driven elements may be caused to vibrate in some cases. In a known method to cope with this, acceleration detectors for detecting the accelerations of the driven elements are provided, signals from the acceleration detectors are subtracted from current commands outputted by velocity feedback control, and vibration is restrained with the resulting differences regarded as current commands for current feedback control (see JP 6-91482A).

It is hard to detect swing of a machine or reduction in machine strength that is caused after prolonged use of the machine.

Owing to restrictions on the place of observation of the machine conditions, malfunction or abnormality of the machine may possibly fail to be detected in accordance with information detected by position, velocity, and current detectors, or may be wrongly detected under the influence of load estimation errors.

### SUMMARY OF THE INVENTION

The present invention provides a controller capable of detecting need of maintenance or abnormality in operation a machining apparatus caused by deterioration of strength, etc. due to aging of the machining apparatus.

The controller of the present invention feedback controls a position and/or a velocity of a driven element of a machining apparatus. According to an aspect of the invention, the controller comprises: acceleration detecting means for detecting an acceleration of the driven element; and determining means for determining an abnormality of the machining apparatus when an absolute value of the acceleration detected by the acceleration detecting means is not smaller than a predetermined threshold value.

According to another aspect of the invention, the controller comprises: acceleration detecting means for detecting an acceleration of the driven element; and determining means for determining an abnormality of the machining apparatus when an absolute value of an average of accelerations detected by the acceleration detecting means is not smaller than a predetermined threshold value.

According to still another aspect of the invention, the controller comprises: position/velocity detecting means for detecting the position and/or the velocity of the driven element; acceleration detecting means for detecting an acceleration of the driven element; estimating means for estimating the acceleration based on values of the position or the velocity of the driven element detected by the position/velocity detecting means; and determining means determining an abnormality of the machining apparatus when an absolute value of a difference between the estimated acceleration by the estimating means and the detected acceleration by the acceleration detecting means is not smaller than a predetermined threshold value.

In the above configuration, a position command or a velocity command may be used in place of the position or the velocity detected by the position/velocity detecting means.

According to still another aspect of the invention, the controller comprises: velocity detecting means for detecting the velocity of the driven element; acceleration detecting means for detecting an acceleration of the driven element; estimating means for estimating a velocity of a portion of the driven element on which the acceleration detecting means is mounted based on values of the acceleration detected by the acceleration detecting means; and determining means for determining an abnormality of the machining apparatus when an absolute value of a difference between the estimated velocity by the estimating means and the detected velocity by the velocity detecting means is not smaller than a predetermined threshold value.

In the above configuration, a velocity command may be used in place of the detected velocity by the velocity detecting means.

According to still another aspect of the invention, the controller comprises: position detecting means for detecting the position of the driven element; acceleration detecting means for detecting an acceleration of the driven element; estimating means for estimating a position of a portion of the driven element on which the acceleration detecting means is mounted based on values of the acceleration detected by the acceleration detecting means; and determining means for determining an abnormality of the machining apparatus when an absolute value of a difference between the estimated position by the estimating means and the detected position by the position detecting means is not smaller than a predetermined threshold value.

In the above configuration, a position command may be used in place of the detected position by the position detecting means.

According to still another aspect of the invention, the controller comprises: acceleration detecting means for detecting an acceleration of a bad for supporting the driven element; and determining means for determining an abnormality of the machining apparatus when an absolute value of the acceleration detected by the acceleration detecting means is not smaller than a predetermined threshold value.

According to still another aspect of the invention, the controller comprises: a plurality of acceleration detecting means for individually detecting accelerations of different portions of the driven element; and determining means for determining an abnormality of the machining apparatus when an absolute value of a difference between two values of the accelerations detected by the acceleration detecting means is not smaller than a predetermined threshold value.

In any of the above configurations, an abnormal condition or an alarm message may be issued when the abnormality of the machining apparatus is determined. Further, a slow-down stop, an emergency stop or a retreat operation may be performed when the abnormality of the machining apparatus is determined.

Abnormality can be accurately detected, since vibration or the like of the driven element is detected based on the detected acceleration value detected by the acceleration detecting means that is attached to the driven element or the like. Further, vibration or the like of necessary regions can be detected more accurately by locating the acceleration detecting means in any optimum positions. Based on the detected acceleration value detected by the acceleration detecting means, the time for the execution of maintenance of the machine can be determined, so that the machine can be prevented from breaking down.

### BRIEF DESCRIPTION OF THE DRAWINGS

FIG. 1 is a schematic block diagram of a controller according to one embodiment of the present invention;
FIG. 2 is a flowchart showing processes executed by respective processors of individual axis control circuits according to a first embodiment of the invention for each position/velocity control period;
FIG 3 is a flowchart showing processes executed by respective processors of individual axis control circuits according to a second embodiment of the invention for each position/velocity control period;
FIG. 4 is a flowchart showing processes executed by respective processors of individual axis control circuits according to a third embodiment of the invention for each position/velocity control period;
FIG 5 is a flowchart showing processes executed by respective processors of individual axis control circuits according to a fourth embodiment of the invention for each position/velocity control period;
FIG. 6 is a flowchart showing processes executed by respective processors of individual axis control circuits according to a fifth embodiment of the invention for each position/velocity control period;
FIG. 7 is a flowchart showing machine abnormality determination processes executed by a main CPU of a controller according to a sixth embodiment of the invention for each given period;
FIG. 8 is a flowchart showing machine abnormality determination processes executed by a main CPU of a controller according to a seventh embodiment of the invention for each given period;
FIG 9 is a flowchart showing machine abnormality determination processes executed by a main CPU of a controller according to an eighth embodiment of the invention for each given period.

### DETAILED DESCRIPTION

The following is a description of an example in which the present invention is applied to a numerical controller as a controller of a machine tool.

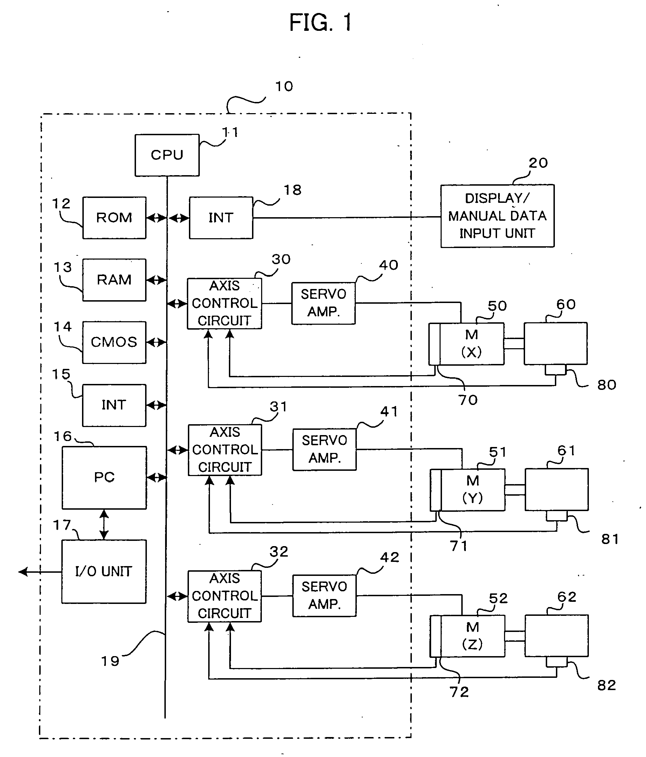

FIG. 1 is a schematic block diagram showing one embodiment of the present invention. A CPU 11 is a processor for generally controlling a controller 10. The CPU 11 reads system programs in a ROM 12 through a bus 19 and controls the entire controller in accordance with the system programs. A RAM 13 is stored with temperature data, display data, and various data that are inputted by an operator through a display/manual data input unit 20 composed of a display device and manual input means. The display device is formed of a CRT or a liquid crystal, while the manual input means is formed of a keyboard or the like. A CMOS memory 14 is a nonvolatile memory that is backed up by a battery (not shown) so that its storage state can be maintained even when the controller 10 is switched off. The CMOS memory 14 is stored with a machining program that is read through an interface 15, a machining program inputted through the display/manual data input unit 20, and the like. Further, the ROM 12 is previously loaded with various system programs.

The interface 15 enables the controller 10 to be connected to external equipment. A PC (programmable controller) 16 outputs a signal for control through an I/O unit 17 to an auxiliary device (e.g., actuator of a tool changer or the like) of a machine tool as an object to be controlled by a sequence program in the controller 10. Further, the PC 16 receives signals from various switches on a control panel that is attached to the body of the machine tool to be controlled by the controller 10, performs necessary signal processing, and then delivers the signals to the CPU 11.

Axis control circuits 30 to 32 for individual axes receive motion commands for the axes and output commands for the axes to servo amplifiers 40 to 42. On receipt of these commands, the servo amplifiers 40 to 42 drive servomotors 50 to 52, respectively, as driven elements for the individual axes of the machine tool (object of control). The individual axis servomotors 50 to 52 contain position/velocity detectors 70 to 72. Position/velocity feedback signals from the position/velocity detectors 70 to 72 are fed back to the axis control circuits 30 to 32, respectively, whereupon the control circuits 30 to 32 performs position/velocity feedback control. The axis control circuits 30 to 32, which are each formed of a processor and memories, such as a ROM, RAM, etc., performs feedback control for position, velocity, and current. More specifically, it controls the positions, velocities, and currents of the individual axis servomotors 50 to 52 and the positions and velocities of driven elements (workpiece, table, and tool axis) 60 to 62 that are driven by the servomotors 50 to 52. The position/velocity detectors 70 to 72 may be provided on the driven elements 60 to 62 instead of being attached to the servomotors so that they can directly detect and feed back the positions and velocities of the driven elements. A control system for driving a spindle is not shown in FIG. 1.

The configurations described above are the same as the configurations of a conventional numerical controller and a machine controlled by the numerical controller. The present embodiment differs from the conventional numerical controller in that driven elements (workpiece, table, and tool axis) for the individual axes are provided with acceleration detecting means 80 to 82, that detected acceleration values detected by the acceleration detecting means 80 to 82 are fed back to the axis control circuits 30 to 32, respectively, and that an abnormality detection process (mentioned later) is performed in accordance with the detected acceleration values fed back in this manner.

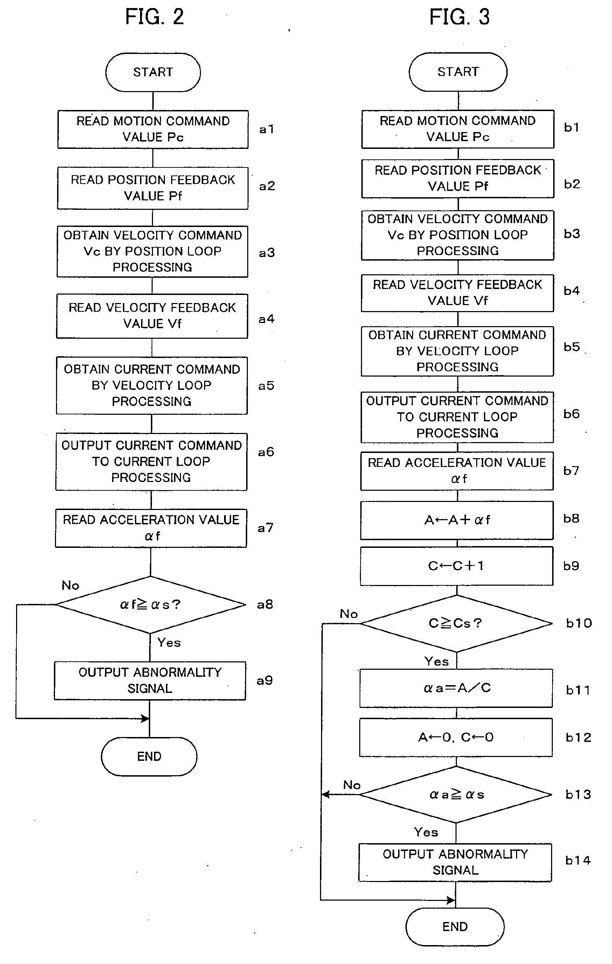

FIG. 2 is a flowchart showing processing to be executed by respective processors of control circuits 30 to 32 at every position/velocity control period according to a first embodiment of the present invention.

In this first embodiment, the control circuits 30 to 32 determine whether the driven elements driven by their corresponding servomotors are subject to vibration that causes abnormal operation. In case of abnormality, an abnormality signal is outputted to the CPU 11 as a host processor.

Each of the processors of the control circuits 30 to 32 reads a motion command value Pc from the CPU 11 that performs numerical control processing such as distribution of motion commands, reads a position feedback value Pf from the position/velocity detector 70 to 72, and obtains a velocity command Vc by position loop processing (position feedback processing) (Steps a1, a2 and a3). Further, each of the processors reads a velocity feedback value Vf from the associated one of the position/velocity detectors 70 to 72, obtains a current command by velocity loop processing (velocity feedback processing) based on the read velocity feedback value Vf and the obtained velocity command Vc, and outputs the current command to current loop processing (Steps a4, a5 and a6). The processing for obtaining the current commands and outputting them to the current loop processing is the same as processing (position/velocity loop processing) by a conventional axis control circuit. The current loop processing is also identical with conventional one.

Then, in the present embodiment, a detected acceleration value af outputted from the associated one of the acceleration detecting means 80 to 82 is read (Step a7), and it is determined whether the read detected acceleration value af is not smaller than a predetermined threshold value as (Step a8). If the acceleration value af is smaller than the threshold value as, the processing for the position/velocity control period concerned is terminated. If the acceleration value af is not smaller than the threshold value as, however, an abnormality signal and the acceleration value af are outputted to the CPU 11 as the host processor that performs the numerical control processing including the distribution of the motion commands. Thereupon, the processing for the position/velocity control period concerned is terminated (Step a9).

On receipt of this abnormality signal, the CPU 11 displays an alarm message, the axis from which the abnormality signal is issued, etc. on the display device of the display/manual data input unit 20. Further, the CPU 11 subjects the machine to slow-down stop or emergency stop. Further, the detected acceleration values af, along with the machine's abnormality signal, are delivered to the CPU 11, and the acceleration values af are also displayed. If the driven elements are subject to vibration owing to reduction of their mechanical strength attributable to prolonged use, the detected acceleration values af exceeds the threshold value as. If the driven elements collide with other objects or if any part, e.g., a tool of the machine, is broken, the detected acceleration values af become larger. Based on the detected acceleration values a f displayed on the display device, therefore, it is determined whether the abnormality requires maintenance of the machine or whether it is attributable to breakage of the tool or any part.

FIG. 3 is a flowchart showing processing to be executed by respective processors of control circuits 30 to 32 at every position/velocity control period according to a second embodiment of the present invention. This second embodiment differs from the first embodiment only in that an average aa of the detected acceleration values af is obtained and that determination of abnormality is based on the average aa.

Steps b1 to b7 that are identical with Steps a1 to a7 shown in FIG. 2 are performed. Thereafter, the detected acceleration values af are added to an accumulator A, and a counter C is incremented by one (Steps b8 and b9).

Then, whether the value of the counter C is not smaller than a set value Cs is determined (Step b10). If the counter value is smaller than the set value Cs, the processing for the position/velocity control period concerned is terminated. Thereafter, the processes of Step b1 to b10 are executed for each position/velocity control period. If it is determined in Step b10 that the set value Cs is reached by the value of the counter C, the average a a of the detected acceleration values af is obtained by dividing the value of the accumulator A by the value of the counter C (Step b11). Then, the accumulator A and the counter C are cleared to zero (Step b12), and it is determined whether the average a a of the detected acceleration values is not smaller than the predetermined threshold value as (Step b13). If the average aa is smaller than the threshold value as, the processing for the period concerned is terminated. If the average a a is not smaller than the threshold value as, on the other hand, an abnormality signal and the obtained average aa of the detected acceleration values are sent to the CPU 11.

On receipt of the abnormality signal, a message or the like indicative of the occurrence of abnormality is displayed on the display device. Further, the delivered average aa of the detected acceleration values is displayed so that the operator is informed of the abnormality. Furthermore, the machine is subjected to slow-down stop or emergency stop.

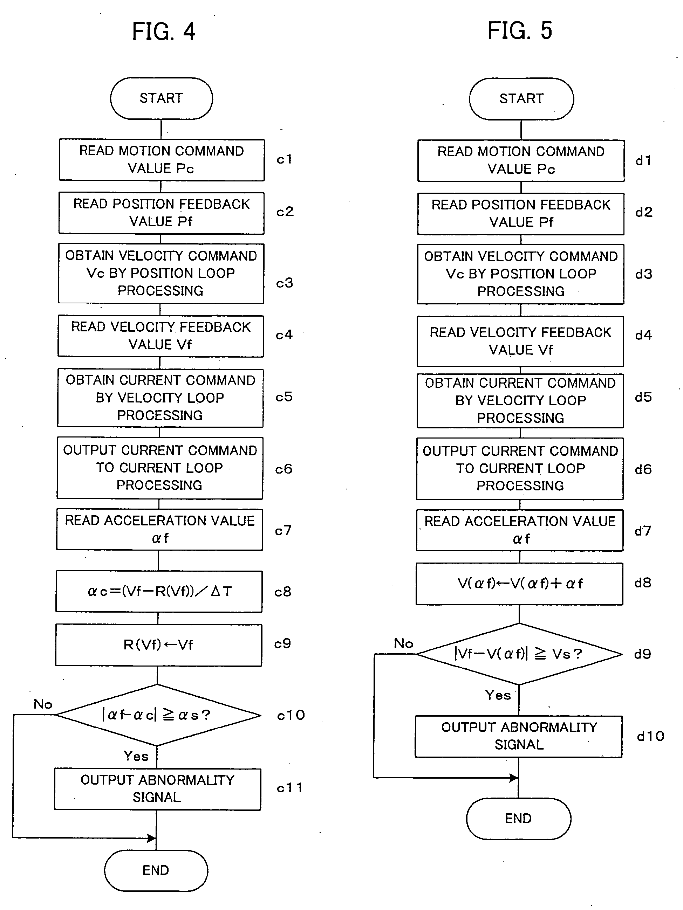

FIG. 4 is a flowchart showing processing to be executed by respective processors of control circuits 30 to 32 at every position/velocity control period according to a third embodiment of the present invention. In this third embodiment, an acceleration is estimated from velocity feedback values that are detected and fed back by position/velocity detectors 70 to 72, and abnormality is detected by differences between the estimated accelerations and the detected acceleration values af.

More specifically, accelerations detected by acceleration detecting means 80 to 82 represent accelerations for positions in which the acceleration detecting means 80 to 82 are mounted. The accelerations estimated by the velocity feedback values represent accelerations for positions in which the velocity detectors are located. If the velocity detectors are attached to servomotors for driving driven elements, the accelerations of the servomotors are represented. If the velocity detectors are attached to the driven elements, on the other hand, the accelerations of the driven elements in the attachment positions are represented. Thus, the differences between the estimated accelerations and the detected accelerations imply that the accelerations vary depending on the positions of the driven elements and that the driven elements are subject to abnormality such as vibration. In this embodiment, abnormality is detected when the differences between the accelerations that depend on the positions of the driven elements exceed a given value. Thus, the acceleration detecting means 80 to 82 are located in optimum selected positions for the driven elements that influence the machining or operation.

In FIG. 4, Steps c1 to c7 are identical with Steps a1 to a7 of the first embodiment and Steps b1 to b7 of the second embodiment.

In Step c8, velocity differences are obtained by subtracting velocity feedback values for the preceding period stored in a register R(Vf) from the velocity feedback values Vf obtained in Step c4, and estimated accelerations a c are obtained by dividing the velocity differences by a velocity control period ΔT. Then, the velocity feedback values Vf detected in the period concerned are loaded into the register and stored as velocity feedback values R(Vf) for the preceding period (Step c9). It is determined whether the absolute values of the differences between the detected acceleration values af detected by the acceleration detecting means 80 to 82 in Step c7 and the estimated accelerations ac obtained in Step c8 are not smaller than the preset threshold value as (Step c10). If the absolute values are smaller than the threshold value as, the processing for the period concerned is terminated as it is. If the absolute values are not smaller than the threshold value as, an abnormality signal is outputted to the CPU 11 (Step c11). Further, the detected acceleration values af detected in Step c7 and the differences between the detected acceleration values af and the estimated acceleration values ac are also outputted to the CPU 11. On receipt of the abnormality signal, the CPU 11 causes the display device to display the detected acceleration values af, the absolute values of the differences between the detected acceleration values af and the estimated accelerations a c, etc., as well as an abnormal message, thereby informing the operator of them. Furthermore, the machine is subjected to slow-down stop or emergency stop.

FIG. 5 is a flowchart showing processing to be executed by respective processors of control circuits 30 to 32 at every position/velocity control period according to a fourth embodiment of the present invention. In this fourth embodiment, a velocity is estimated based on the detected acceleration values af detected by the acceleration detecting means 80 to 82, and abnormality is determined by the estimated velocities and detected velocities detected by position/velocity detectors 70 to 72. In this embodiment, abnormality is determined when the difference between velocity for the position of the driven element in which the acceleration detecting means 80 to 82 is located and velocity for the position in which the velocity detector is located reach a given value. The velocity difference that depends on the position of the driven element imply the occurrence of vibration or the like in the driven element, and this phenomenon is detected as abnormality. Also in this embodiment, the acceleration detecting means 80 to 82 are located in optimum positions for the driven elements that influence the machining or operation.

In FIG. 5, Steps d1 to d7 are identical with Steps a1 to a7 of the first embodiment. In the process of Step d8, an estimated velocity V(af) is obtained by adding up detected acceleration value af obtained in Step d7 in a register for adding up the detected acceleration value. Then, it is determined whether the absolute value of the difference between the estimated velocity V(af) and the velocity feedback value Vf for actual velocity detected by each of the position/velocity detectors 70 to 72 obtained in Step d4 is not smaller than a threshold value Vs (Step d9). If the absolute value is smaller than the threshold value Vs, the processing for the present period is terminated as it is. If the absolute value is not smaller than the threshold value Vs, an abnormality signal is outputted to the CPU 11. Further, the detected acceleration value af detected in Step d7 IS also outputted to the CPU 11 (Step d10). On receipt of the abnormality signal, the CPU 11 causes the display device to display the detected acceleration value af and the like, as well as an abnormal message, thereby informing the operator of them. Furthermore, the machine is subjected to slow-down stop or emergency stop.

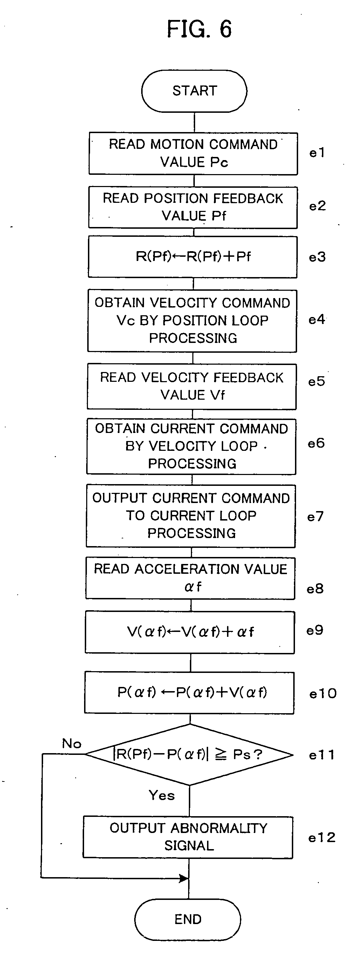

FIG. 6 is a flowchart showing processing to be executed by respective processors of control circuits 30 to 32 at every position/velocity control period according to a fifth embodiment of the present invention. In this fifth embodiment, a position is estimated from the detected acceleration values af detected by the acceleration detecting means 80 to 82, and abnormality is determined by the absolute value of the difference between the estimated position and the detected position detected by the position detectors. Also in this embodiment, the acceleration detecting means are located in optimum positions for the driven elements that influence the machining or operation. The difference between the estimated position based on the acceleration values obtained by the acceleration detecting means and the position obtained by the position detector imply abnormality in the driven elements, such as vibration. Thus, abnormality is detected by this phenomenon.

In FIG. 6, Steps e1 to e3 and Step e5 to e8 are identical with Steps a1 to a3 and Step a4 to a7 of the first embodiment. In this embodiment, Step e3 is additionally provided to obtain the position by adding up position feedback values Pf in a register R(Pf).

In Step e9, an estimated velocity V(af) is obtained by adding up detected acceleration values af in a register for obtaining the estimated velocity. Further, an estimated position P(af) is obtained by adding up the estimated velocities V(af) in a register for obtaining the estimated position (Step e10). It is determined whether the absolute value of the difference between the estimated position P(af) and the position R(Pf) obtained in Step e3 are not smaller than a threshold value Ps (Step e11). If the absolute value is smaller than the threshold value Ps, the processing for the present period is terminated as it is. If the absolute value is not smaller than the threshold value Ps, an abnormality signal is outputted to the CPU 11. Further, the detected acceleration value af detected in Step e8 and the like are also outputted to the CPU 11 (Step e12). On receipt of the abnormality signal, the CPU 11 causes the display device to display the detected acceleration value af and the like, as well as an abnormal message, thereby informing the operator of them. Furthermore, the machine is subjected to slow-down stop or emergency stop.

In the third to fifth embodiments (FIGS. 4 to 6) described above, information on velocity feedback or position feedback is utilized. However, the position or velocity command may be used in place of the position or velocity feedback. In the third embodiment shown in FIG. 4, the estimated acceleration ac may be obtained by using the velocity commands Vc in place of the velocity feedback values Vf. In the fourth embodiment shown in FIG. 5, moreover, the determination of Step d9 may be performed by using the velocity commands Vc in place of the velocity feedback values Vf. In the fifth embodiment shown in FIG. 6, furthermore, command positions may be obtained by adding up the motion command values Pc and used in place of the positions R(Pf) obtained by adding up the position feedback values.

In the first to fifth embodiments described above, the acceleration detecting means 80 to 82 are attached, respectively, to the driven elements 60 to 62 that are driven by the servomotors, and abnormality of the machine is detected in accordance with the detected acceleration values detected by the acceleration detecting means 80 to 82 and the like. In a sixth embodiment to be described below, however, machine abnormality is detected by acceleration detecting means that are attached to a bed of the machine on which the driven elements are mounted and move.

If any portions of the machine are subjected to secular change and reduced in mechanical strength, owing to prolonged use of the machine, the bed of the machine that supports the driven elements sometimes may vibrate as the driven elements move. If the driven elements collide or interfere with other objects, moreover, it causes the machine to vibrate. In the sixth embodiment, this vibration is detected to detect the machine abnormality.

In the sixth embodiment, the acceleration detecting means (not shown) are attached to the machine bed, and their outputs are captured into the controller 10 through an interface. The CPU 11 of the controller 10 determines the machine abnormality by the captured detected acceleration values af.

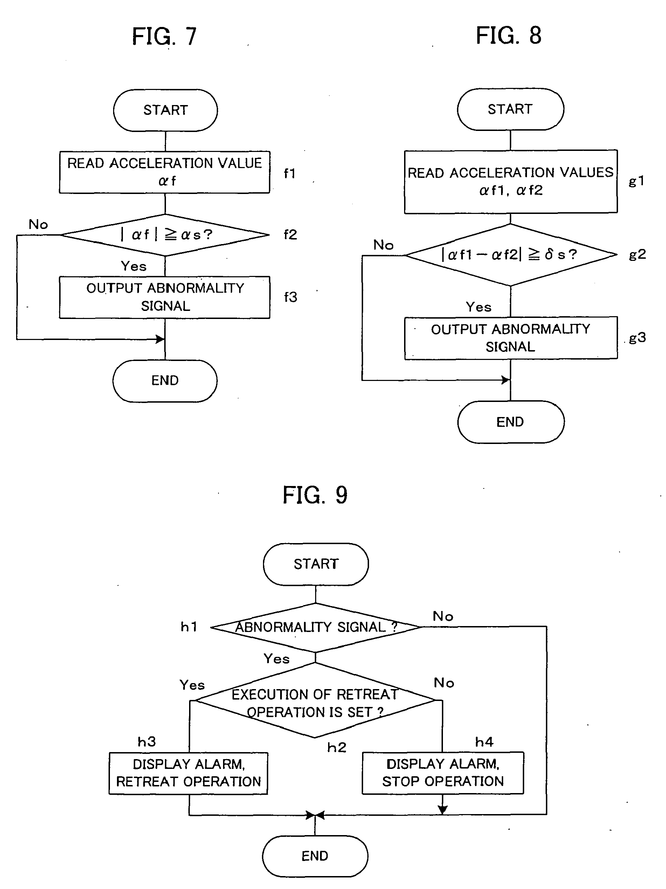

FIG. 7 is a flowchart showing machine abnormality determination processing to be executed by the CPU 11 at every given period in the sixth embodiment.

The CPU 11 reads the detected acceleration value af outputted from the acceleration detecting means through the interface (Step f1), and it is determined whether an absolute value of the detected acceleration value af are not smaller than the preset threshold value as (Step f2). If the absolute value is smaller than the threshold value as, the processing for the period concerned is terminated. If the absolute value is not smaller than the threshold value as, an abnormality signal is outputted, and the then detected acceleration value af, as well an abnormal message, are displayed on the display device of the display/manual data input unit 20. Thereupon, the machine is subjected to slow-down stop or emergency stop. Thus, the machine bed vibrates, accelerations caused by this vibration are detected by the acceleration detecting means, and machine abnormality is detected when the accelerations reach the threshold value as or larger values.

FIG. 8 is a flowchart showing a seventh embodiment of the present invention. In this seventh embodiment, acceleration detecting means are attached individually to different positions on a driven element, whereby machine abnormality is detected. If the driven element vibrates, an acceleration that is generated by the vibration varies depending on the positions on the driven element. Thus, the vibration of the driven element is detected to detect machine abnormality in accordance with individual detected acceleration values detected by the acceleration detecting means in the different positions on the driven element. In this seventh embodiment, two acceleration detecting means are attached individually to the opposite end portions of the driven element, and the machine abnormality is determined by detected acceleration values from the two acceleration detecting means.

The flowchart of FIG. 8 shows processing to be executed at every position/velocity control period by respective processors of control circuits 30 to 32 of servomotors for driving driven elements for the individual axes. In the present embodiment, however, the processing is executed at each position/velocity control period by the CPU 11 as the main processor of the controller 10. In a machine tool or the like, a table on which a workpiece is mounted is driven by X- and Y-axis servomotors. The acceleration detecting means are attached to a final driven element that is driven by a plurality of servomotors for X- and Y-axes, not to the driven elements that are driven individually by the X- and Y-axis servomotors. Thus, vibration that is generated in the driven element of which the position and velocity are to be finally controlled can be detected. To attain this, each acceleration detecting means is configured so that its output is captured into the controller 10 through the interface.

The CPU 11 reads detected acceleration values af1 and af2 delivered from the two acceleration detecting means (Step g1) and determines whether the absolute value |af1 - af2| of the difference between the two detected acceleration values is not smaller than a threshold value ds (Step g2). If the absolute value is smaller than the threshold value ds, this processing is terminated. If the absolute value is not smaller than the threshold value ds, an abnormality signal is outputted, and the then detected acceleration values af1 and af2, as well an alarm message, are displayed on the display device of the display/manual data input unit 20. Further, the machine is subjected to slow-down stop or emergency stop. Thus, the driven element vibrates, whereupon machine abnormality can be detected.

In the foregoing embodiments, an alarm message or the like is displayed for the operator's information on the display device of the display/manual data input unit 20 so that the machine is subjected to slow-down stop or emergency stop when machine abnormality is determined. Alternatively, however, a conventional retreat operation may be performed when abnormality is detected.

FIG 9 is a flowchart showing processes that are executed by the CPU 11 of the controller 10 for each given period when the retreat operation is performed. First, a parameter indicating whether or not to execute the retreat operation is set in advance.

The CPU 11 determines whether or not an abnormality signal is inputted (cases of the first to fifth embodiments) or abnormality is detected (cases of the sixth and seventh embodiments) (Step h1). If no abnormality is detected, the processing for the period concerned is terminated as it is. If any abnormality is detected, on the other hand, it is determined whether or not execution of the retreat operation is set (Step h2). If the execution of the retreat operation is set, a conventional alarm display and the retreat operation are executed (Step h3). If the execution of the retreat operation is not set, on the other hand, an alarm is displayed, and the machine is subjected to slow-down stop or emergency stop (Step h4).

## Claims

1. A controller for feedback controlling a position and/or a velocity of a driven element of a machining apparatus, comprising:
acceleration detecting means for detecting an acceleration of the driven element; and
determining means for determining an abnormality of the machining apparatus when an absolute value of the acceleration detected by said acceleration detecting means is not smaller than a predetermined threshold value.

2. A controller for feedback controlling a position and/or a velocity of a driven element of a machining apparatus, comprising:
acceleration detecting means for detecting an acceleration of the driven element; and
determining means for determining an abnormality of the machining apparatus when an absolute value of an average of accelerations detected by said acceleration detecting means is not smaller than a predetermined threshold value.

3. A controller for feedback controlling a position and/or a velocity of a driven element of a machining apparatus, comprising:
position/velocity detecting means for detecting the position and/or the velocity of the driven element;
acceleration detecting means for detecting an acceleration of the driven element;
estimating means for estimating the acceleration based on values of the position or the velocity of the driven element detected by said position/velocity detecting means; and
determining means determining an abnormality of the machining apparatus when an absolute value of a difference between the estimated acceleration by said estimating means and the detected acceleration by said acceleration detecting means is not smaller than a predetermined threshold value.

4. A controller for feedback controlling a position and/or a velocity of a driven element of a machining apparatus in accordance with a position command and/or a velocity command, comprising:
acceleration detecting means for detecting an acceleration of the driven element;
estimating means for estimating the acceleration based on values of the position command or the velocity command; and
determining means determining an abnormality of the machining apparatus when an absolute value of a difference between the estimated acceleration by said estimating means and the detected acceleration by said acceleration detecting means is not smaller than a predetermined threshold value.

5. A controller for feedback controlling a velocity of a driven element of a machining apparatus, comprising:
velocity detecting means for detecting the velocity of the driven element;
acceleration detecting means for detecting an acceleration of the driven element;
estimating means for estimating a velocity of a portion of the driven element on which the acceleration detecting means is mounted based on values of the acceleration detected by said acceleration detecting means; and
determining means for determining an abnormality of the machining apparatus when an absolute value of a difference between the estimated velocity by said estimating means and the detected velocity by said velocity detecting means is not smaller than a predetermined threshold value.

6. A controller for feedback controlling a velocity of a driven element of a machining apparatus in accordance with a velocity command, comprising:
acceleration detecting means for detecting an acceleration of the driven element;
estimating means for estimating a velocity of a portion of the driven element on which the acceleration detecting means is mounted based on values of the acceleration detected by said acceleration detecting means; and
determining means for determining an abnormality of the machining apparatus when an absolute value of a difference between the estimated velocity by said estimating means and the velocity command is not smaller than a predetermined threshold value.

7. A controller for feedback controlling a position of a driven element of a machining apparatus, comprising:
position detecting means for detecting the position of the driven element;
acceleration detecting means for detecting an acceleration of the driven element;
estimating means for estimating a position of a portion of the driven element on which said acceleration detecting means is mounted based on values of the acceleration detected by said acceleration detecting means; and
determining means for determining an abnormality of the machining apparatus when an absolute value of a difference between the estimated position by said estimating means and the detected position by said position detecting means is not smaller than a predetermined threshold value.

8. A controller for feedback controlling a position of a driven element of a machining apparatus in accordance with a position command, comprising:
acceleration detecting means for detecting an acceleration of the driven element;
estimating means for estimating a position of a portion of the driven element on which said acceleration detecting means is mounted based on values of the acceleration detected by said acceleration detecting means; and
determining means for determining an abnormality of the machining apparatus when an absolute value of a difference between the estimated position by said estimating means and the position command is not smaller than a predetermined threshold value.

9. A controller for feedback controlling a position and/or a velocity of a driven element of a machining apparatus, comprising:
acceleration detecting means for detecting an acceleration of a bad for supporting the driven element; and
determining means for determining an abnormality of the machining apparatus when an absolute value of the acceleration detected by said acceleration detecting means is not smaller than a predetermined threshold value.

10. A controller for feedback controlling a position and/or a velocity of a driven element of a machining apparatus, comprising:
a plurality of acceleration detecting means for individually detecting accelerations of different portions of the driven element; and
determining means for determining an abnormality of the machining apparatus when an absolute value of a difference between two values of the accelerations detected by said acceleration detecting means is not smaller than a predetermined threshold value.

11. A controller according to any one of claims 1 to 10, wherein an abnormal condition or an alarm message is issued when the abnormality of the machining apparatus is determined.

12. A controller according to any one of claims 1 to 10, wherein a slow-down stop, an emergency stop or a retreat operation is performed when the abnormality of the machining apparatus is determined.
